# EUROPEAN PATENT APPLICATION

(11) **EP 4 589 079 A1**
(43) Date of publication of application: **23.07.2025**
(21) Application number: 24217824.2
(22) Date of filing: 05.12.2024
(51) Int. Cl.: E02F 9/08

(54) **WORKING MACHINE**

(30) Priority: 16.01.2024 JP 2024004562
(71) Applicant: KUBOTA CORPORATION, Osaka-shi, Osaka 556-8601 (JP)
(72) Inventor: ARAI, Yasuhiko, SAKAI-SHI, OSAKA, 5900908 (JP); FUKUNAGA, Kenshi, SAKAI-SHI, OSAKA, 5900908 (JP)
(74) Representative: Cabinet Beau de Loménie

(57) **Abstract**

A working machine includes an electrical component (EP), at least two structural bodies (30,31,32) each having electrical conductivity, and a conductive screw to conductively connect the at least two structural bodies to each other.

## Description

### BACKGROUND OF THE INVENTION

### Field of the Invention

The present invention relates to a working machine including an electrical component.

### Description of the Related Art

A working machine such as a backhoe disclosed in Japanese Unexamined Patent Application Publication No. 2023-150768 includes a plurality of structural bodies constituting a frame, and various electrical components that are supplied with electric power from a battery. The structural bodies are formed of a rigid metal material and support various accessories. The electrical components are also attached to predetermined positions of the structural bodies and supported by the structural bodies, and the plurality of structural bodies are electrically connected to each other via a ground wire.

### SUMMARY OF THE INVENTION

When the structural bodies are electrically connected to each other by the ground wire, components such as the ground wire and screws are required, and hence the number of components increases and the man-hour required for connecting the ground wire to the structural bodies also increases.

Thus, the present invention provides a working machine that can reduce the number of components and the man-hour for attachment and can easily and reliably bring structural bodies into conduction.

A working machine according to an aspect of an example of the present invention includes: an electrical component; at least two structural bodies each having electrical conductivity; and a conductive screw to conductively connect the at least two structural bodies to each other.

At least one structural body of the structural bodies conductively connected by the conductive screw may include a metal base having electrical conductivity, and a coating film formed on the metal base. The conductive screw may include, at a portion thereof to be in contact with the at least one structural body, a peeling structure to peel off the coating film and bring the conductive screw into contact with the metal base.

At least one structural body of the structural bodies conductively connected by the conductive screw may include a metal base having electrical conductivity, and a coating film formed on the metal base. The conductive screw includes, at a portion thereof to be in contact with the at least one structural body, a contact spot to penetrate the coating film and come into contact with the metal base.

The conductive screw may include a shaft including a screw thread to be screwed into at least one structural body of the two or more structural bodies overlapping each other, and a protrusion defining the peeling structure that protrudes outward in a radial direction of the shaft from the screw thread.

The conductive screw may include a head at a proximal end of the shaft and having a mating surface to come into contact with one of the structural bodies, and a protrusion defining the peeling structure that protrudes from the mating surface.

The conductive screw may include a large-diameter portion that is a portion of the shaft close to a proximal end of the shaft, and a small-diameter portion that is another portion of the shaft closer to a distal end of the shaft than the large-diameter portion and has a diameter smaller than a diameter of the large-diameter portion. The small-diameter portion may include a screw thread to be screwed into the at least one structural body of the two or more of the structural bodies overlapping each other, the screw thread being able to be fitted into a large-diameter hole provided in the at least one structural body that is closest to the distal end of the shaft among the two or more structural bodies overlapping each other. The protrusion defining the peeling structure that protrudes outward in the radial direction of the shaft from the screw thread may be provided on an outer peripheral surface of the small-diameter portion.

The large-diameter portion may include, as the peeling structure, a convex thread and a concave thread on an outer periphery thereof, the convex thread and the concave thread extending lengthwise in an axial direction of the shaft and being alternately aligned in a circumferential direction of the shaft.

The at least two structural bodies may include: a traveling frame; a turning frame coupled to the traveling frame so as to be turnable about an axis extending in an up-down direction; and a support frame coupled to the turning frame, to support another member. The turning frame and the support frame may be brought into conduction by the conductive screw.

The turning frame may include a fixture portion to fix the support frame to the turning frame in a state of being overlapped with the turning frame by two or more male screws. At least one of the two or more male screws may be the conductive screw.

The working machine may include two or more fastening male screws to fix the support frame to the fixture portion in addition to the conductive screw. The conductive screw may connect the fixture portion and the support frame between the two or more fastening male screws.

The conductive screw may have a diameter smaller than a diameter of the fastening screw.

According to the present invention, the number of components and the man-hour for attachment can be reduced, and the structural bodies can be brought into conduction easily and reliably.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a side view of a working machine according to an embodiment of the present invention.
FIG. 2 is a partially enlarged perspective view of the working machine according to the embodiment in a state in which a portion of a hood is detached.
FIG. 3 is a perspective view of a turning frame and a support frame of the working machine according to the embodiment in a state in which the support frame is attached to the turning frame.
FIG. 4 is an arrangement diagram for explaining arrangement of the support frame (support legs) with respect to the turning frame of the working machine according to the embodiment.
FIG. 5 is a sectional view of a state in which the turning frame (fixture portion) and the support leg (support plate) of the embodiment are overlapped.
FIG. 6 is a sectional view taken along line VI-VI in FIG. 4.
FIG. 7 is an enlarged view of portion VII in FIG. 6.
FIG. 8 is a sectional view of a state in which a turning frame (fixture portion) and a support leg (support plate) are overlapped in a working machine according to another embodiment of the present invention.
FIG. 9 is a partially enlarged sectional view of a state in which the turning frame and a support frame are electrically connected and mechanically fastened via a conductive screw in the working machine according to the other embodiment.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

A working machine according to an embodiment of the present invention will be described below with reference to the drawings.

The working machine of the present embodiment is a backhoe that can travel. In the following description, a straight travel direction (a direction of forward travel and backward travel) of the working machine is referred to as a first direction. Also, a forward travel side in the first direction of the working machine is referred to as a front side or a forward side, and a backward travel side in the first direction of the working machine is referred to as a rear side or a rearward side. Further, a direction orthogonal to the first direction and an up-down direction is referred to as a second direction, and the up-down direction is referred to as a third direction.

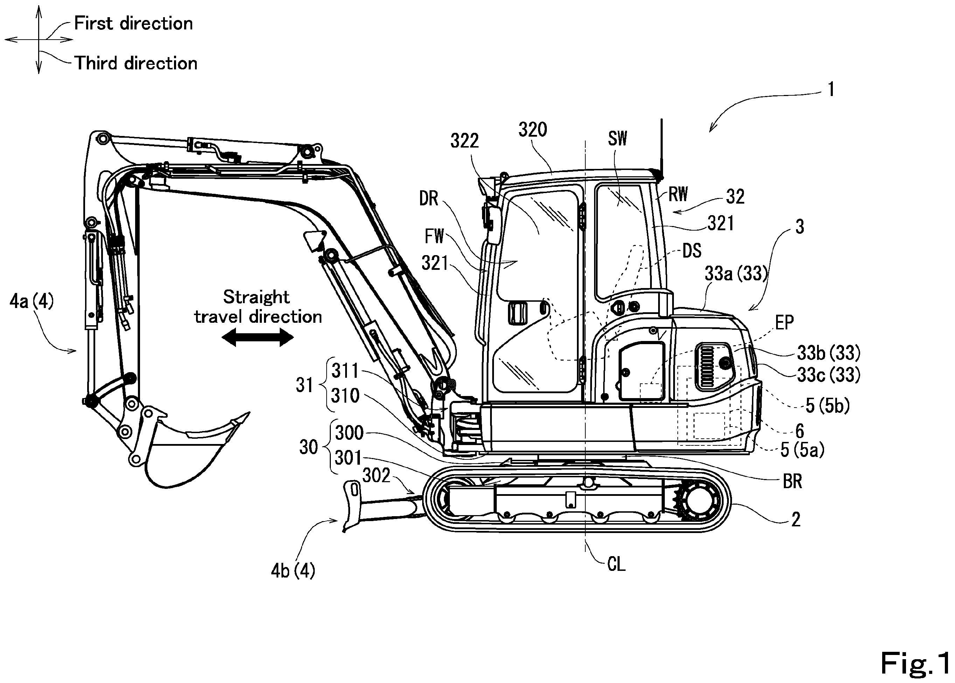

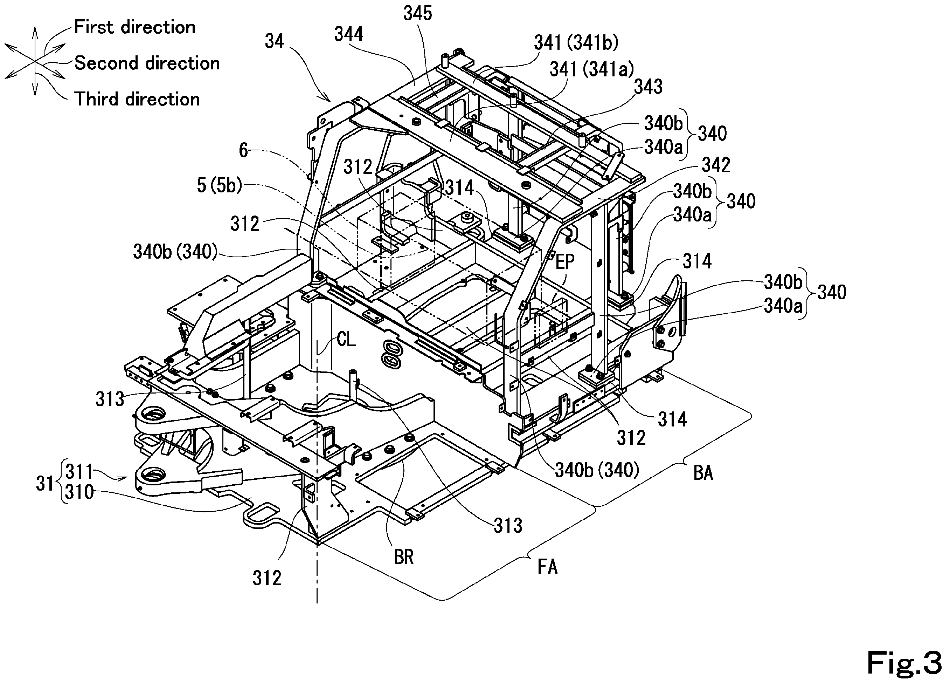

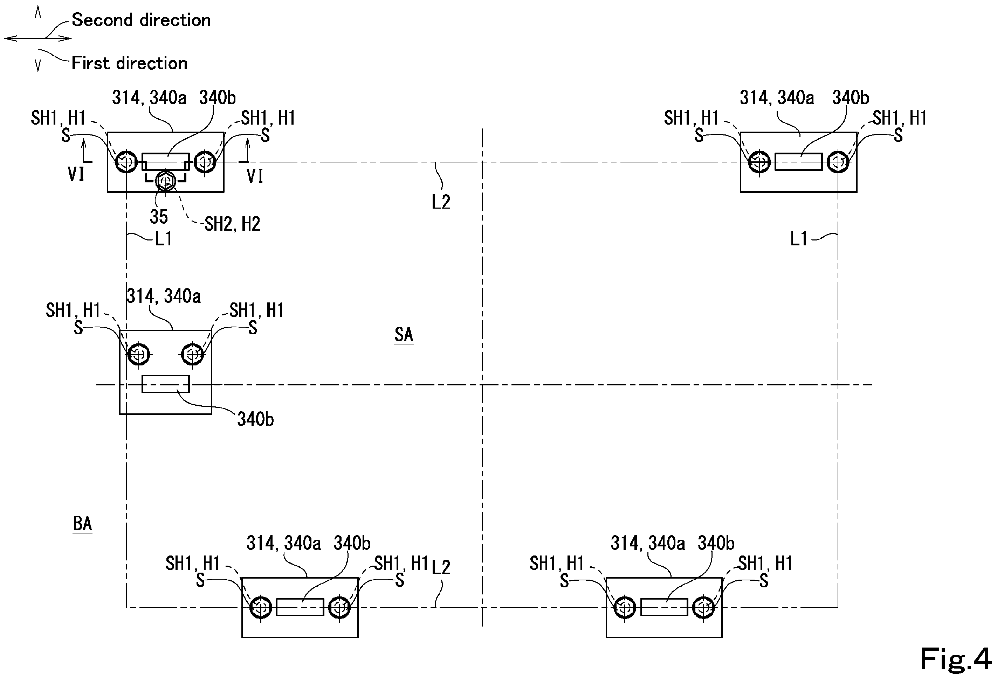

As illustrated in FIGS. 1 to 3, a working machine 1 includes at least one electrical component EP (see FIGS. 1 and 3), a plurality of structural bodies 30, 31, 32, 33, and 34 each having electrical conductivity, and a conductive screw 35 (see FIG. 4) that electrically connects the structural bodies 30, 31, 32, 33, and 34 to each other.

More specifically, as illustrated in FIG. 1, the working machine 1 includes at least one traveling device 2, a machine body 3 supported by the traveling device 2 and including the electrical component EP and the plurality of structural bodies 30, 31, 32, 33, and 34, and a working device 4 supported by the machine body 3. Additionally, the working machine 1 includes a battery 5 (5a, 5b). Further, the working machine 1 includes a hydraulic system that actuates the traveling device 2 and the working device 4, and a prime mover 6 that drives a hydraulic pump included in the hydraulic system. In the present embodiment, an electric motor is used as the prime mover 6; however, the prime mover 6 is not limited to the electric motor and may be an engine. Also, in the present embodiment, the traveling device 2 and the working device 4 are driven with hydraulic pressure; however, this does not imply any limitation, and a portion or the entirety of the traveling device 2 and the working device 4 may be driven with electric power.

In the working machine 1, the at least one traveling device 2 includes a pair of traveling devices 2 opposingly apart from each other in the second direction. Each of the pair of traveling devices may be a crawler traveling device or a tire traveling device. In the present embodiment, each of the pair of traveling devices 2 is the crawler traveling device.

The working machine 1 includes a shovel device 4a and a dozer device 4b as the working device 4.

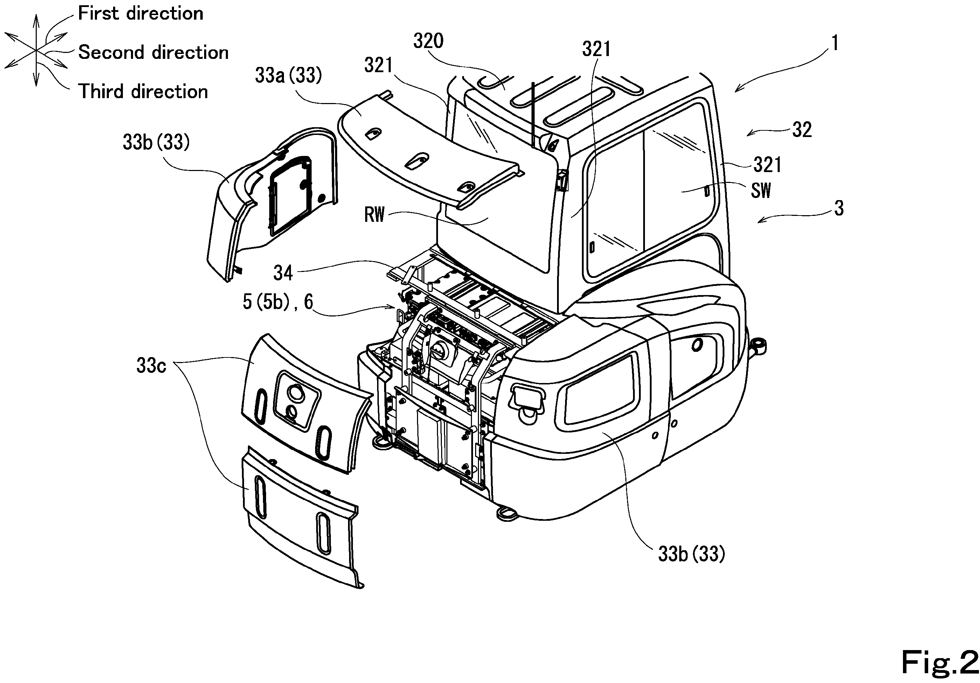

The machine body 3 includes the plurality of structural bodies 30, 31, 32, 33, and 34 defining a frame (framework) that supports various accessories including the electrical component EP. As illustrated in FIGS. 1 and 2, the plurality of structural bodies 30, 31, 32, 33, and 34 are mechanically integrated by being fastened with screws. In the present embodiment, as illustrated in FIGS. 1 and 2, the machine body 3 includes, as the structural bodies, a traveling frame 30 (see FIG. 1) supported by the pair of traveling devices 2, a turning frame 31 (see FIG. 1) that can turn above the traveling frame 30 about an axis CL extending in the up-down direction, an operator's seat DS (see FIG. 1) disposed above the turning frame 31, an operator's seat protection mechanism 32 that covers and protects the operator's seat DS, a hood 33 that protects devices such as the prime mover 6, and a support frame 34 that supports the hood 33.

The traveling frame 30 is a structural body produced in a way that a metal material is welded and machined and a surface of a metal base (metal material) is coated. As illustrated in FIG. 1, the traveling frame 30 includes a body portion 300 and a pair of coupling portions 301 that extend outward from both side ends in the second direction of the body portion 300 and to which the respective traveling devices 2 are attached. The body portion 300 is disposed between the pair of traveling devices 2. The traveling frame 30 of the present embodiment includes a first coupling portion 302 to which the dozer device 4b as the working device 4 is coupled, the first coupling portion 302 being connected to one end portion located on the front side of the body portion 300. A turning bearing BR having a turning center line CL extending in the up-down direction is fixed to an upper surface of the body portion 300 by male screws.

The turning frame 31 is a structural body produced in a way that a metal material is welded and machined and a surface of a metal base (metal material) is coated. More specifically, as illustrated in FIG. 3, the turning frame 31 includes a base plate 310 and a second coupling portion 311 to which the shovel device 4a as the working device 4 is coupled, the second coupling portion 311 being connected to one end portion in the first direction of the base plate 310.

The turning bearing BR fixed to the upper surface of the body portion 300 is fixed to the base plate 310. Accordingly, the base plate 310 (turning frame 31) is rotatable relative to the traveling frame 30 about the axis CL (a turning center CL of the turning bearing BR) extending in the up-down direction.

At least one rib 312 and a column 313 that support a device or another structural body (for example, the operator's seat protection mechanism 32 or the like) disposed above are vertically provided on an upper surface of the base plate 310. Also, in the present embodiment, a plurality of fixture portions 314 that fix support legs 340 (described later) of the support frame 34 are provided on the upper surface of the base plate 310.

More specifically, the operator's seat DS and the operator's seat protection mechanism 32 are disposed in an area FA of a front portion in the first direction of the base plate 310 (hereinafter referred to as a front area FA), and devices such as the prime mover 6 are disposed in an area BA of a rear portion in the first direction of the base plate 310 (hereinafter referred to as a rear area BA). In the front area FA, the column 313 is vertically provided to support a plate-shaped step where the operator's seat DS is disposed. The rib 312 and the column 313 may include those that are screwed (fixed) to the base plate 310 or those that are fixed to the base plate 310 by welding.

As illustrated in FIG. 1, the operator's seat protection mechanism 32 of the present embodiment is a so-called cabin that covers the entire operator's seat DS and protects a worker seated on the operator's seat DS. The cabin (operator's seat protection mechanism) 32 includes a frame that is a structural body in which a surface of a metal base (metal material) is coated. Specifically, as illustrated in FIGS. 1 and 2, the frame of the cabin 32 includes a roof 320 that covers an area above the operator's seat DS, and at least one pillar 321 that supports the roof 320. The at least one pillar 321 includes a pair of front pillars 321 and a pair of rear pillars 321. The pair of pillars 321 disposed on the front side are directly supported by the turning frame 31. The pair of pillars 321 disposed on the rear side are indirectly supported by the turning frame 31 via the support frame 34 (see FIG. 2). In other words, the support frame 34 is coupled to the turning frame 31 and supports another member.

A front window FW is disposed at a front surface of the operator's seat protection mechanism 32, a rear window RW is disposed at a rear surface thereof, an openable/closable door 322 and a side window SW are disposed at one side surface thereof (see FIG. 1), and a side window SW is disposed at another side surface thereof (see FIG. 2). Accordingly, the cabin 32 surrounds the operator's seat DS and defines an operator's room DR. In the cabin 32 (operator's room DR), various meters, switches, and electrical components such as a display (monitor) are disposed and fixed to the pillars 321 and the like.

As illustrated in FIGS. 2 and 3, the prime mover 6 and the driving battery 5b (described later) are disposed in the rear area BA of the base plate 310. Accordingly, as illustrated in FIG. 3, the rib 312 for reinforcement, the rib 312 that supports the prime mover 6 and the driving battery 5b, and the like are vertically provided in the rear area BA of the base plate 310. The rib 312 for reinforcement, the rib 312 that supports the prime mover 6 and the driving battery 5b, and the like are fixed to the upper surface of the base plate 310 by welding. Also, the plurality of fixture portions 314 that fix the support frame 34 that supports the hood 33 covering the prime mover 6 and the driving battery 5b are provided in the rear area BA of the base plate 310. Each of the plurality of fixture portions 314 is fixed to the base plate 310 by welding. Upper surfaces of the plurality of fixture portions 314 are arrangement surfaces on which the support legs 340 (described later) of the support frame 34 are disposed and are flat surfaces.

In the present embodiment, the fixture portions 314 are disposed at five positions in accordance with the number of support legs 340. The metal base of each of the fixture portions 314 is a metal plate having a rectangular shape in a plan view, and is directly or indirectly fixed to the upper surface of the metal base of the base plate 310 by welding. Each of the fixture portions 314 is disposed on the boundary (indicated by a two-dot chain line in the drawing) of a rectangular area SA that is accommodated in the rear area BA of the base plate 310. The rectangular area SA is defined by a pair of first straight lines L1 extending in the first direction and a pair of second straight lines L2 extending in the second direction and connected to the pair of first straight lines L1.

Each of the plurality of fixture portions 314 has a pair of screw holes (hereinafter referred to as first screw holes) SH1 that are formed in the up-down direction and disposed to be spaced apart in the second direction. The pair of first screw holes SH1 are for screwing male screws (fastening male screws) S for mechanically coupling the support leg 340. The first screw hole SH1 of each of the plurality of fixture portions 314 is disposed on the boundary of the rectangular area SA or inward of the boundary of the rectangular area SA.

At least one fixture portion 314 of the plurality of fixture portions 314 is provided with a screw hole (hereinafter referred to as a second screw hole) SH2 for screwing a conductive screw (described later) that is disposed between the pair of first screw holes SH1 and inward of the boundary of the rectangular area SA. In the present embodiment, the second screw hole SH2 is provided only in one fixture portion 314 of two fixture portions 314 located on the front side. In the present embodiment, the second screw hole SH2 is disposed at an intermediate (central) position between the pair of first screw holes SH1, and is located within the rectangular area SA while deviating from the second straight lines L2.

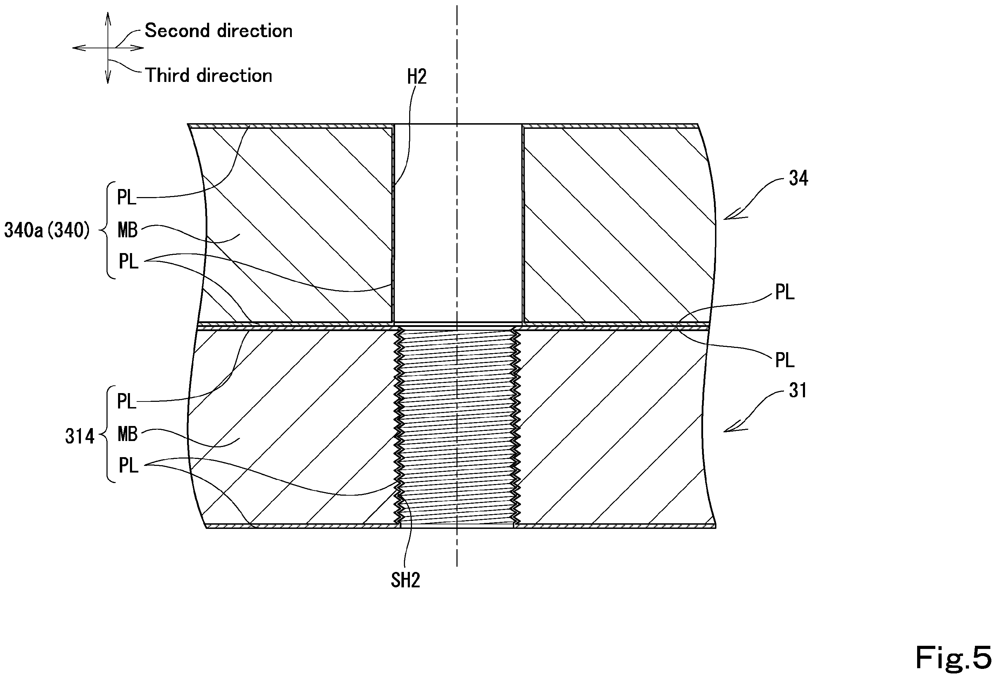

As illustrated in FIG. 5, the turning frame 31 includes a coating film PL formed by coating on the surface of the metal base MB. In the present embodiment, the turning frame 31 is provided with through holes, screw holes, openings, and the like in addition to the first screw holes SH1 and the second screw hole SH2 at appropriate positions, and inner peripheral surfaces of these are also coated. In other words, the turning frame 31 is coated after machining, and the coating film PL of the coating material is formed on the inner peripheral surfaces of the holes, the screw holes (including the first screw holes SH1 and the second screw hole SH2), and the openings in addition to outer surfaces (front and back surfaces) of the base plate 310 and the fixture portions 314.

As illustrated in FIG. 2, the hood 33 covers the devices such as the prime mover 6 disposed on or above the base plate 310. In the present embodiment, the hood 33 covers the devices such as the prime mover 6 from above, the sides, and the rear. Specifically, the hood 33 of the present embodiment includes a first hood 33a that covers an area above the devices such as the prime mover 6, a pair of second hoods 33b, 33b that cover the sides of the devices such as the prime mover 6, and a third hood 33c that covers the rear of the devices such as the prime mover 6. Also, the electrical components (for example, a relay device, an electric fan, and the like) EP are attached to the support frame 34 and are disposed at predetermined positions.

The support frame 34 is a structural body produced in a way that a metal material is welded and machined and a surface of a metal base (metal material) is coated. Specifically, as illustrated in FIG. 3, the support frame 34 includes the plurality of support legs 340 each extending in the up-down direction, and a leg coupling portion 341 that connects upper ends of the plurality of support legs 340. The plurality of support legs 340 are disposed to correspond to the fixture portions 314 of the turning frame 31. In other words, five support legs 340 are provided to correspond to the fixture portions 314.

Two of the five support legs 340 are disposed on the front side in the first direction to be spaced apart in the second direction. Two support legs 340 of the remaining three support legs 340 are disposed on the rear side in the first direction to be spaced apart in the second direction, and the remaining support leg 340 is disposed between the support legs 340 located on the front side and the support legs 340 located on the rear side.

In the present embodiment, two support legs 340 located on the front side (two support legs 340 disposed to be spaced apart in the first direction) of three support legs 340 located on one side in the second direction are connected by a coupling beam 342 extending in the first direction. A rear half of the coupling beam 342 is perpendicular to the support leg 340 located on the rear side, and a front half of the coupling beam 342 is inclined downward toward the front side, and a distal end of the coupling beam 342 is connected to the support leg 340 located on the front side. The support legs 340 and the coupling beam 342 are integrally formed by a metal strip being bent. A longitudinal beam (referred to as a first longitudinal beam) 343 extending forward is connected to an upper end of the remaining one support leg 340 (one support leg 340 located on the rear side) of the three support legs 340 located on the one side in the second direction. In the present embodiment, the first longitudinal beam 343 and the one support leg 340 located on the rear side are integrally formed by a metal strip being bent.

In the present embodiment, one support leg 340 located on the front side of two support legs 340 located on another side in the second direction is connected to a longitudinal beam (hereinafter referred to as a second longitudinal beam) 344 extending rearward. The support leg 340 and the second longitudinal beam 344 are integrally formed by a metal strip being bent. One support leg 340 located on the rear side of the two support legs 340 located on the other side in the second direction is connected to a longitudinal beam (hereinafter, referred to as a third longitudinal beam) 345 extending forward. The support leg 340 and the third longitudinal beam 345 are integrally formed by a metal strip being bent.

The leg coupling portion 341 includes a plurality of cross beams 341a and 341b extending in the second direction. The plurality of cross beams 341a and 341b are made of metal and are disposed side by side in the first direction. The plurality of cross beams 341a and 341b are disposed to extend over the coupling beam 342, the first longitudinal beam 343, the second longitudinal beam 344, and the third longitudinal beam 345, and are coupled to the coupling beam 342, the first longitudinal beam 343, the second longitudinal beam 344, and the third longitudinal beam 345 by welding. In other words, the plurality of support legs 340 are mechanically and electrically connected via the plurality of cross beams 341a and 341b, the coupling beam 342, the first longitudinal beam 343, the second longitudinal beam 344, and the third longitudinal beam 345.

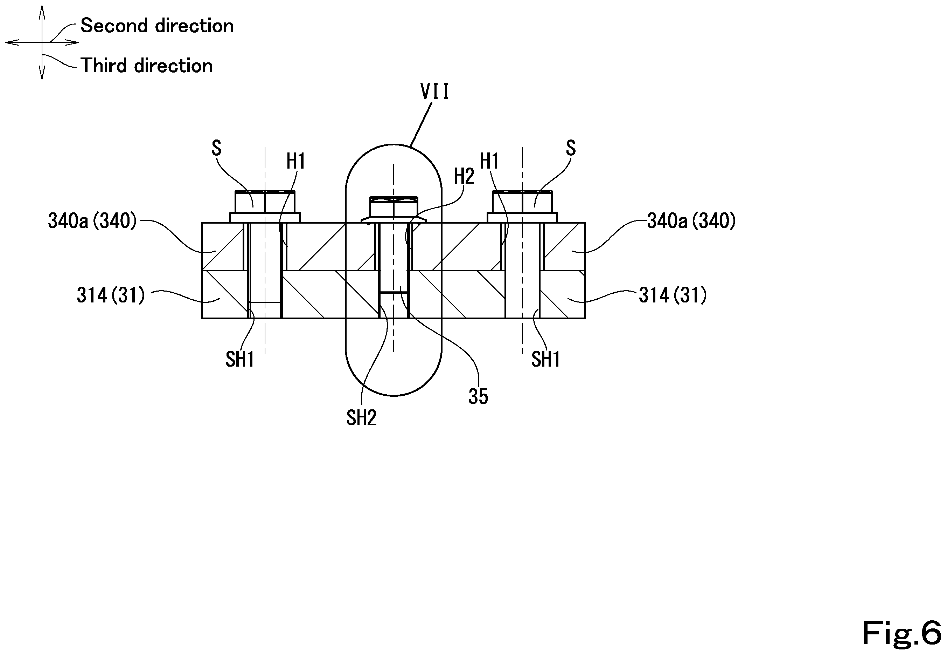

As illustrated in FIG. 4, each of the plurality of support legs 340 includes a support plate 340a disposed on the fixture portion 314 of the turning frame 31, and a leg body 340b connected to the support plate 340a, the leg body 340b extending upward from the support plate 340a. The planar shape of the support plate 340a is set in accordance with the planar shape of the fixture portion 314 to which the support plate 340a is fixed. Also, as illustrated in FIG. 6, the support plate 340a has at least one first through hole H1 formed to correspond to the first screw hole SH1 of the fixture portion 314 to which the support plate 340a is fixed. In other words, each support plate 340a has a pair of first through holes H1 disposed to be spaced apart in the second direction. As illustrated in FIG. 6, each of the first through holes H1 is set to have a hole diameter through which the male screw S that is screwed into the first screw hole SH1 can be inserted. In the present embodiment, the support plate 340a of the support leg 340 corresponding to one fixture portion 314 of the two fixture portions 314 located on the front side has a second through hole H2 corresponding to the second screw hole SH2 (see FIGS. 4 and 6). The second through hole H2 is set to have a hole diameter through which the conductive screw 35 that is screwed into the second screw hole SH2 can be inserted.

The support plate 340a of each of the support legs 340 is mechanically fixed to the turning frame 31 (fixture portion 314) by the male screws S inserted into the first through holes H1 being screwed into the first screw holes SH1 of the fixture portion 314. Also, the support plate 340a having the second through hole H2 is electrically connected to the turning frame 31 (fixture portion 314) by the conductive screw 35 inserted into the second through hole H2 being screwed into the second screw hole SH2.

The support frame 34 having the above-described configuration supports the other structural bodies 32 and 33 placed on the leg coupling portion 341 (cross beam 341a) at predetermined height positions. In the present embodiment, the cabin 32 (the pillars 321 located on the rear side) are fixed to the cross beam 341a via male screws. Also, the support frame 34 (leg coupling portion 341) supports the hood 33 (first hood 33a) at a predetermined position via metal fittings.

The working machine 1 includes, as the battery 5, a battery 5a that supplies electric power to the electrical component EP and a driving battery 5b that supplies electric power to the prime mover 6. The battery 5a that supplies the electric power to the electrical component EP is disposed in the rear area BA, and the driving battery 5b is disposed on or above the rear area BA of the base plate 310 together with the prime mover (electric motor) 6. The batteries 5a and 5b are fixed to the base plate 310 at certain positions via fixing brackets.

The at least one electrical component EP of the working machine 1 of the present embodiment includes various components such as a headlamp that illuminates the front of the working machine 1, a solenoid valve that controls the flow of hydraulic fluid in the hydraulic system, a control board that controls the prime mover 6, a relay device (switch device) that opens/closes an electric path of an electric system, and an electric fan for cooling. These electrical components EP are electrically connected to the battery 5 (5a) and are actuated with the electric power supplied from the battery 5 (5a). Also, since the electric motor is employed as the prime mover 6 of the working machine 1 of the present embodiment, the prime mover (electric motor) 6 is connected to the driving battery 5 (5b) and is actuated with the electric power supplied from the driving battery 5 (5b). The electrical components EP and the prime mover 6 are disposed at appropriate positions in accordance with the purpose of use and the like, and are fixed to the structural bodies 31, 32, 33, and 34 located in the vicinity thereof.

The working machine 1 of the present embodiment includes the conductive screw 35 that conductively connects two or more to be coupled of the structural bodies 31, 32, 33, and 34 to make the two or more of the structural bodies 31, 32, 33, and 34 have the same potential. More specifically, the working machine 1 includes a large number of male screws S in addition to the conductive screw 35. Each of the male screws S different from the conductive screw 35 is a general male screw (hexagonal head bolt), and secures the mechanical coupling strength between the structural bodies 30, 31, 32, 33, and 34. In contrast, the conductive screw 35 that makes the two or more of the structural bodies 30, 31, 32, 33, and 34 (the structural bodies 30, 31, 32, 33, and 34 each including the coating film PL as an insulating layer in a surface layer) have the same potential is configured to be able to electrically connect the structural bodies 30, 31, 32, 33, and 34 to each other.

Each of the plurality of structural bodies 30, 31, 32, 33, and 34 includes the metal base MB and the coating film PL formed on the metal base MB as described above. The coating film PL on the metal base (metal material) MB is also formed on the inner peripheral surfaces of the metal holes and the inner peripheral surfaces of the screw holes.

Thus, as illustrated in FIG. 5, when the structural bodies 31 and 34 are overlapped with each other, the coating film (insulating layer) PL is interposed between the structural bodies 31 and 34. Hence electrical connection at the contacting surface between the structural bodies 31 and 34 is not secured. Also, since the coating film PL is present on the inner peripheral surface of the second screw hole SH2, even when the general male screw S is screwed into the second screw hole SH2, the coating film PL remains between a screw thread on the inner peripheral surface of the second screw hole SH2 and the male screw (screw thread) S, and the electrical connection between the structural bodies 31 and 34 is not secured.

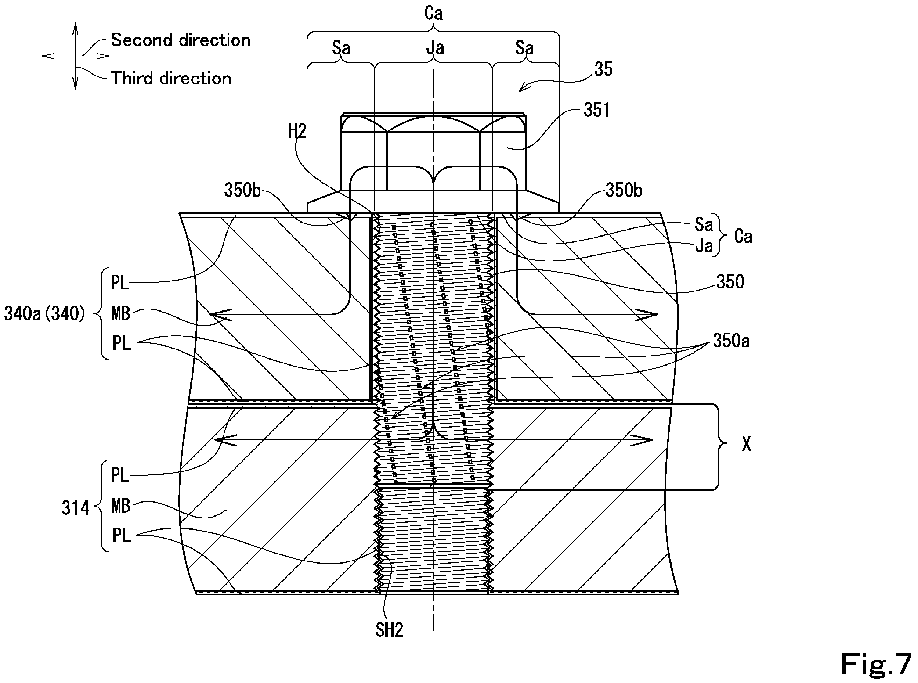

In view of such a situation, in the working machine 1 of the present embodiment, as illustrated in FIG. 7, the conductive screw 35 includes peeling portions 350a and 350b that peel off the insulating layer (coating film) PL that inhibits the electrical connection between the structural bodies 31 and 34.

More specifically, the conductive screw 35 is molded using a metal material (for example, stainless alloy) having electrical conductivity. The conductive screw 35 includes a shaft 350 having a screw thread that is screwed into at least one of the structural bodies 31 and 34. Also, the conductive screw 35 includes a head 351 provided at a proximal end of the shaft 350 and having a mating surface Sa that comes into contact with one of the structural bodies 31 and 34. In other words, the conductive screw 35 includes the shaft 350 and the head 351 connected to one end of the shaft 350. The screw thread is formed in a spiral shape on an outer periphery of the shaft 350. The conductive screw 35 has a diameter smaller than the diameter of each of the other male screws (fastening male screws) S. In other words, the shaft 350 of the conductive screw 35 has a diameter smaller than the diameter of a shaft of each of the other male screws (fastening male screws) S.

The head 351 of the conductive screw 35 is formed so as to be engageable with a tool such as a wrench or a screwdriver. Specifically, the head 351 is formed in a polygonal shape in a plan view, or has a hole formed in a polygonal shape in a plan view, a groove formed in a straight shape (minus (-) shape) in a plan view, or a groove formed in a cross shape (plus (+) shape) in a plan view. In other words, the conductive screw 35 has a form of a hexagonal head screw, a screw with a hexagonal hole, a plus screw, a minus screw, or a combination thereof. The head 351 of the conductive screw 35 of the present embodiment is formed in a hexagonal shape in a plan view, and the appearance of the conductive screw 35 is a form of a so-called hexagonal head screw.

The head 351 is set to have a diameter larger than the diameter of the shaft 350. A surface Ca of the head 351 to which the shaft 350 is connected includes a connection area Ja with respect to the shaft 350 and an annular area Sa surrounding the connection area Ja. The annular area Sa is a so-called mating surface Sa that faces or is in close contact with a surface of the structural body 34 in a state in which the shaft 350 is screwed into the second screw hole SH2.

The conductive screw 35 (conductive member) includes, at a portion thereof to be in contact with the structural body 31 or 34, includes at least one of a peeling structure that peels off the coating film PL and a contact spot that penetrates the coating film PL and comes into contact with the metal base MB of the structural body 31 or 34.

In the present embodiment, the conductive screw 35 has the peeling structures 350a and 350b that peel off the coating films PL to expose the metal bases MB (to bring the conductive screw 35 into contact with the metal bases MB) on an outer peripheral surface of the shaft 350 and the mating surface Sa (the contacting areas with respect to the structural bodies 31 and 34).

Specifically, the conductive screw 35 includes at least one first peeling portion 350a as the peeling structure that peels off the coating film PL (the coating film PL on the inner peripheral surface (screw thread) of the screw hole) of one structural body 31 of two structural bodies 31 and 34 that are overlapped and exposes the metal base MB. The first peeling portion 350a is disposed on the outer periphery of the shaft 350. In the present embodiment, the conductive screw 35 is formed with a plurality of first peeling portions 350a that partially protrude from an outer surface of the screw thread of the shaft 350 and are spaced apart in the circumferential direction. Each of the first peeling portions 350a is a protrusion partially protruding from the screw thread. In other words, the peeling structure (first peeling portion 350a) is a protrusion protruding outward in the radial direction of the shaft 350 from the screw thread. In the present embodiment, the first peeling portion 350a is a protrusion protruding in a burr shape by the screw thread being partially deformed into a recessed shape. The first peeling portion 350a peels off (scrapes off) the coating film PL on an inner peripheral surface of the screw thread by the shaft 350 being screwed into the second screw hole SH2, and exposes the metal base MB having electrical conductivity of the structural body 31 (the fixture portion 314 on the base plate 310 of the turning frame 31).

Accordingly, by fastening the conductive screw 35, the screw thread having electrical conductivity of the conductive screw 35 comes into close contact with the metal base MB having electrical conductivity of the screw thread of the second screw hole SH2 of the structural body 31, and the conductive screw 35 and the structural body 31 (the metal base MB of the turning frame 31) are electrically connected (brought into a conductive state). In the present embodiment, the plurality of first peeling portions 350a are disposed at equal intervals in the circumferential direction, and in the present embodiment, the plurality of first peeling portions 350a are disposed in alignment in a direction in which the central axis of the shaft 350 extends (in the drawing, along a line inclined with respect to the central axis).

The conductive screw 35 includes, in addition to the first peeling portions 350a, the second peeling portion 350b that peels off the coating film PL (the coating film PL on an outer surface) of another structural body 34 of the two structural bodies 31 and 34 that are overlapped and exposes the metal base MB. The second peeling portion 350b is provided on the mating surface Sa of the head 351. The second peeling portion 350b protrudes outward from the mating surface Sa and is tapered as it goes away from the mating surface Sa. In other words, the second peeling portion 350b protrudes straight in the central-axis direction of the shaft 350. In the present embodiment, the second peeling portion 350b is formed in a conical shape.

The conductive screw 35 is fastened by the shaft 350 being screwed into the screw hole, and thus the mating surface Sa is brought into contact with an outer surface of the structural body 34, similarly to the general male screw S. The shaft 350 of the conductive screw 35 is screwed into the screw hole and fastened. Hence the mating surface Sa approaches or comes into contact with the outer surface of the structural body 34. At this time, a distal end of the second peeling portion 350b comes into contact with the structural body 34 prior to the mating surface Sa, and further moves toward the structural body 34 while rotating about the central axis of the shaft 350. Accordingly, the coating film PL in the surface layer of the structural body 34 is scraped off by the second peeling portion 350b, the metal base MB is exposed, and the second peeling portion 350b comes into contact with the metal base MB. When a contact spot is employed instead of the second peeling portion 350b, the contact spot is formed in a conical shape or a needle shape, and is provided in the circumferential direction to protrude from the mating surface Sa in a state of being inclined downward toward the distal end. Accordingly, when the contact spot moves toward the structural body 34 while rotating about the central axis of the shaft 350, the contact spot obliquely pierces the coating film PL, penetrates the coating film PL, and comes into contact with the metal base MB.

As described above, the electrical components EP are attached to the support frame 34. Also, various electrical components EP such as the solenoid valve included in the hydraulic system are also attached to the turning frame 31. Coupling between the turning frame 31 and the support frame 34 will be described here as an example. In the present embodiment, the shaft 350 of the conductive screw 35 is inserted into the second through hole H2 in the support plate 340a of the support frame 34 as the one structural body 34, and is screwed into the second screw hole SH2 of the fixture portion 314 of the turning frame 31 as the other structural body. In other words, when the conductive screw 35 with the shaft 350 inserted into the second through hole H2 is screwed into the second screw hole SH2, the shaft 350 advances in the central-axis direction while rotating about the central axis. At this time, the first peeling portions 350a move along the screw thread while peeling off the coating film PL on the inner peripheral surface of the second screw hole SH2. Accordingly, the coating film PL in a range X in which the shaft 350 is screwed (a range X that is the inner peripheral surface of the second screw hole SH2 and in which the conductive screw 35 is screwed) is peeled off and removed, and the metal base MB is exposed. Accordingly, the screw thread or the first peeling portion 350a of the shaft 350 of the conductive screw 35 comes into contact or pressure contact with the metal base MB of the support plate 340a.

Also, as the shaft 350 advances in the central-axis direction while rotating about the central axis, the mating surface Sa of the head 351 approaches an outer surface (upper surface) of the support plate 340a of the support frame 34 that is the one structural body 34, and the second peeling portion 350b comes into contact with the upper surface of the support plate 340a. Then, the head 351 follows the screwing of the shaft 350 and advances toward the support plate 340a while rotating, and hence the second peeling portion 350b scrapes off the coating film PL on the outer surface of the support plate 340a. Accordingly, the metal base MB of the support plate 340a is exposed, and at least the second peeling portion 350b of the mating surface Sa and the second peeling portion 350b of the head 351 comes into contact or pressure contact with the metal serving as the base.

When the hardness of the material of the conductive screw 35 is higher (harder) than the hardness of the base (metal) of the support plate 340a, the second peeling portion 350b comes into contact with the base of the support plate 340a in a state of biting into the base of the support plate 340a, in a state in which the mating surface Sa is in contact with the support plate 340a.

Thus, the shaft 350 of the conductive screw 35 is in contact or pressure contact with the metal base MB of the one structural body 31, and the head 351 of the conductive screw 35 is in contact or pressure contact with the metal base MB of the other structural body 34, whereby the conductive screw 35 electrically connects the turning frame 31 (fixture portions 314) and the support frame 34 and also mechanically fastens them.

In the present embodiment, the conductive screw 35 is disposed at the position corresponding to the intermediate (central) position of the pair of first screw holes SH1 into which the general male screws S are screwed, and is screwed into the second screw hole SH2 located in the rectangular area SA while deviating from the second straight lines L2. Hence the general male screws (fastening male screws) S bear the strength burden for coupling the structural bodies 31 and 34 to each other, and the strength burden of the conductive screw 35 is smaller than the strength burden of the male screws (fastening male screws) S. Accordingly, the electrical connection between the structural bodies 31 and 34 by the conductive screw 35 is reliably secured. As described above, the conductive screw 35 may have the diameter smaller than the diameter of the male screw (fastening male screw) S, and may be made of a material having a strength lower than the strength of the male screw S.

The male screw (the fastening male screw: the hexagonal head bolt in the present embodiment) S that is inserted into the first through hole H1 uses a washer or a spring washer interposed between the head 351 and the support plate 340a. However, in the case of the conductive screw 35, the second peeling portion 350b needs to be brought into contact with the outer surface of the support plate 340a, and hence the mating surface Sa of the head 351 directly faces the support plate 340a without the washer or the spring washer interposed.

As described above, in the working machine 1 of the present embodiment, even though the turning frame 31 and the support frame 34 that are the structural bodies 31 and 34 are coated (rust-proof treated), the turning frame 31 and the support frame 34 can be electrically connected only by the turning frame 31 and the support frame 34 being screw-fixed (coupled) via the conductive screw 35. Hence the number of components and the man-hour for assembly are reduced as compared with the case of the connection via the ground wire.

Next, a working machine according to another embodiment of the present invention will be described. Since the configuration other than the configuration of the conductive screw and the accompanying configuration is similar to that of the above-described embodiment, only the conductive screw and the accompanying configuration will be described here. Also, the same names and the same reference signs as those of the above-described embodiment are given to configurations similar to and corresponding to the above-described embodiment, and the description of the above-described embodiment is referred to for the description thereof, and the description thereof will be omitted here.

A working machine 1 of the present embodiment also includes two or more male screws S and 35 for fastening structural bodies 31 and 34 with each other, and at least one of the male screws is a conductive screw 35.

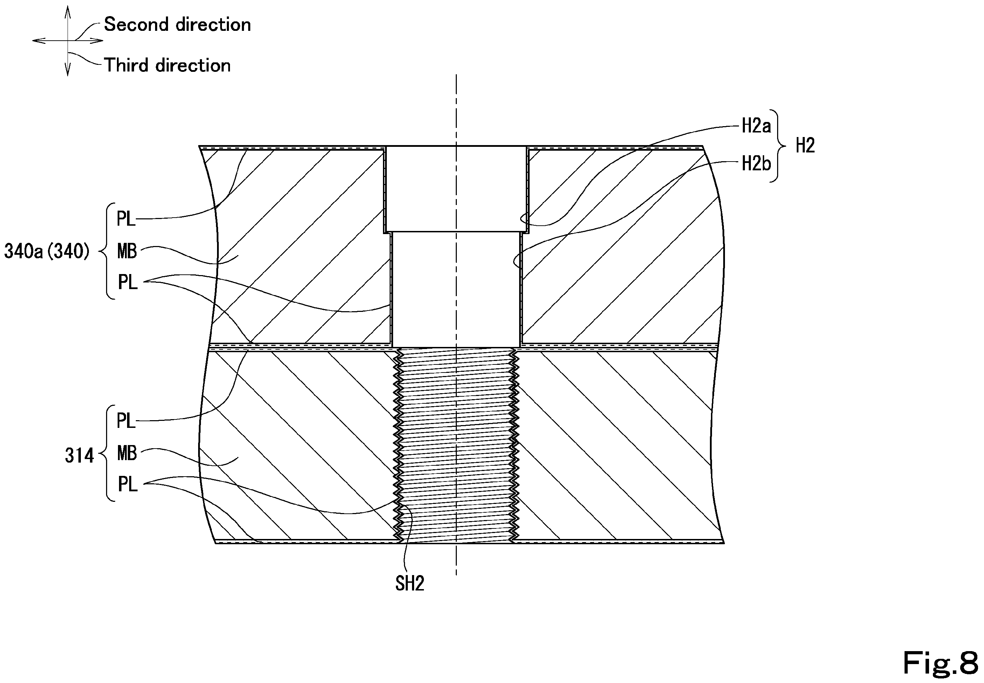

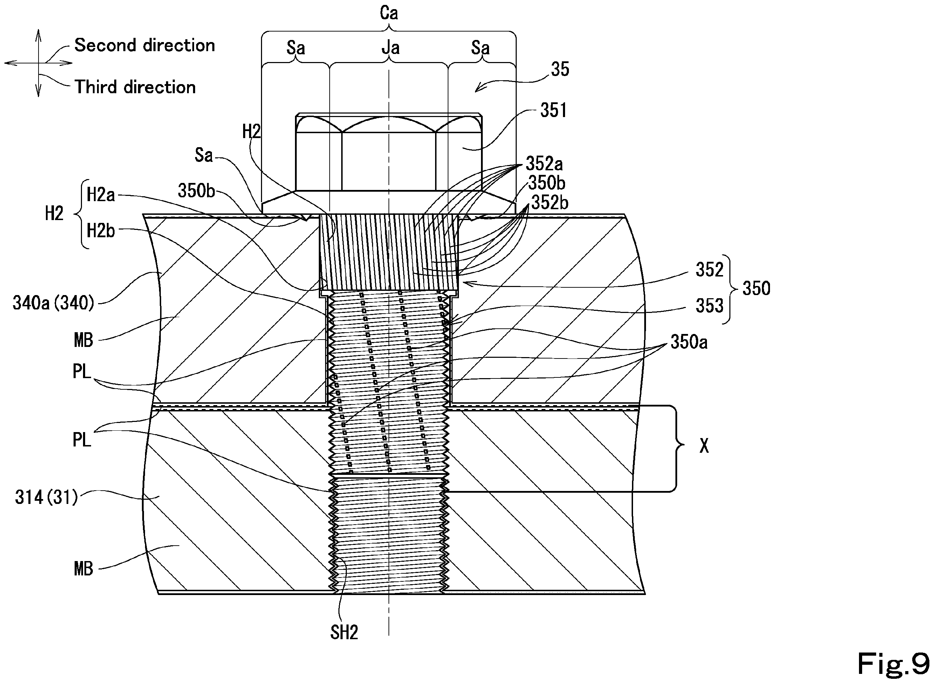

The conductive screw 35 includes a shaft 350 having a proximal end and a distal end in one direction, and a head 351 coupled to the proximal end of the shaft 350. In the present embodiment, a second through hole H2 of another structural body 34 through which the conductive screw 35 is inserted is formed as a stepped hole as illustrated in FIG. 8. In other words, the second through hole H2 includes a large-diameter hole H2a and a small-diameter hole H2b that has a diameter smaller than the diameter of the large-diameter hole H2a and through which a small-diameter portion 353 (described later) of the shaft 350 can be inserted. Also in the present embodiment, a coating film PL is formed on an inner peripheral surface of the second through hole H2 (an inner peripheral surface of the large-diameter hole H2a and an inner peripheral surface of the small-diameter hole H2b). On the basis of this, the conductive screw 35 includes a large-diameter portion 352 that is a portion of the shaft 350 close to the proximal end of the shaft 350, and a small-diameter portion 353 that is another portion of the shaft 350 closer to the distal end of the shaft 350 than the large-diameter portion 352 and has a diameter smaller than the diameter of the large-diameter portion 352. In other words, as illustrated in FIG. 9, the shaft 350 includes the large-diameter portion 352 to which the head 351 is connected, and the small-diameter portion 353 set to have a diameter smaller than the diameter of the large-diameter portion 352, the small-diameter portion 353 being continuous with the large-diameter portion 352.

The small-diameter portion 353 is configured such that the small-diameter portion 353 can be screwed into at least one outermost structural body 31 of overlapping two or more structural bodies 31 and 34 and the small-diameter portion 353 can be inserted into the small diameter hole H2b of at least the other outermost structural body 34. In contrast, the large-diameter portion 352 is configured to be able to be fitted into the large-diameter hole H2a of at least the other outermost structural body 34 of the overlapping two or more structural bodies 31 and 34.

In the present embodiment, a peeling structure of the conductive screw 35 is provided on an outer peripheral surface of each of the small-diameter portion 353 and the large-diameter portion 352. The peeling structure provided on an outer periphery of the large-diameter portion 352 includes one or more convex threads 352a and one or more concave threads 352b extending lengthwise in the axial direction, the one or more convex threads 352a and the one or more concave threads 352b being alternately aligned in the circumferential direction. In other words, the peeling structure of the large-diameter portion 352 is formed in a reamer shape. The one or more convex threads 352a and the one or more concave threads 352b may be formed in a straight-groove reamer shape disposed in the central-axis direction or a twisted-groove reamer shape in which the one or more convex threads 352a and the one or more concave threads 352b are formed in a spiral shape as long as the one or more convex threads 352a and the one or more concave threads 352b are long in the central-axis direction of the large-diameter portion 352. The large-diameter portion 352 has a maximum diameter equal to or slightly larger than the mechanical dimension (the dimension of the pilot hole without the coating film PL) of the hole (large-diameter hole) of the structural body 34. When the small-diameter portion 353 is screwed into the second screw hole SH2 of the one structural body 31, the coating film PL on the inner peripheral surface of the large-diameter hole H2a is removed, and the distal end or ends of the one or more convex threads 352a come into contact with the metal base MB.

The second through hole H2 provided in the structural body 34 is a stepped hole having the large-diameter hole H2a having the same length (depth) as the length in the axial direction of the large-diameter portion 352, and the small-diameter hole H2b through which the shaft 350 can be inserted. In the case of the stepped hole, the conductive screw 35 may have, as a peeling structure, a protrusion protruding from an annular surface that is a connection surface between the large-diameter portion 352 and the small-diameter portion 353 and that surrounds the small-diameter portion 353, in addition to the one or more convex threads 352a and the one or more concave threads 352b. Also, as in the above-described embodiment, the conductive screw 35 may have, as a peeling structure, a protrusion protruding from the mating surface Sa. In any of these aspects, the coating film PL on the outer surface is peeled off and the metal base MB is exposed by the small-diameter portion 353 being screwed with the structural bodies 30, 31, 32, 33, and 34 and advancing in the central-axis direction, and the peeling structure continuous with the large-diameter portion 352 comes into contact with the metal base MB.

In contrast, the peeling structure provided on the outer peripheral surface of the small-diameter portion 353 includes a plurality of protrusions 350a disposed to be spaced apart in the circumferential direction, the plurality of protrusions 350a protruding from the screw thread. In other words, the peeling structure provided on the outer peripheral surface of the small-diameter portion 353 is a plurality of protrusions 350a protruding in a burr shape from the screw thread and disposed to be spaced apart in the circumferential direction, as in the above-described embodiment. This configuration is similar to that of the above-described embodiment, and the coating film PL on the inner peripheral surface of the second screw hole SH2 is removed by the plurality of protrusions 350a in the range X in which the conductive screw 35 is screwed into the second screw hole SH2.

Also, when the large-diameter portion 352 is formed so as to extend over structural bodies of two or more members and the small-diameter portion 353 is screwed into the outermost structural body 31, three or more structural bodies can be fastened and electrically connected.

The above-described embodiments (preferred embodiments of the present invention) are as described above, and the above-described embodiments include a large number of inventions including the present invention, and particularly provides inventions described in the following items.

(Item 1) A working machine 1 comprising: an electrical component EP; at least two structural bodies 30, 31, 32 each having electrical conductivity; and a conductive screw 35 to conductively connect the at least two structural bodies 30, 31, 32, 33, 34 to each other.

According to the working machine 1 of Item 1, the ground wire and the screw that fixes the ground wire are not required, and the number of components can be reduced. As a result, the man-hour for electrically connecting the structural bodies 30, 31, 32, 33, and 34 to each other can be reduced. Also, it is not necessary to secure the space for routing the ground wire, and the problem of disconnection or the like of the ground wire is eliminated.

(Item 2) The working machine 1 according to Item 1, wherein at least one structural body of the structural bodies 31, 34 conductively connected by the conductive screw 35 includes a metal base MB having electrical conductivity, and a coating film PL formed on the metal base MB, and the conductive screw 35 includes, at a portion thereof to be in contact with the at least one structural body 31, 34, a peeling structure 350a, 350b to peel off the coating film PL and bring the conductive screw 35 into contact with the metal base MB.

According to the working machine 1 of Item 2, even when the coating film PL (insulating layer) is present in the surface layer of the structural body 31 or 34, the structural bodies 31 and 34 can be conductively (electrically) connected to each other by bringing the conductive screw 35 into contact with the metal base MB of the structural body 31 or 34.

(Item 3) The working machine 1 according to Item 1, wherein at least one structural body of the structural bodies 31, 34 conductively connected by the conductive screw 35 includes a metal base MB having electrical conductivity, and a coating film PL formed on the metal base MB, and the conductive screw 35 includes, at a portion thereof to be in contact with the at least one structural body 31, 34, a contact spot to penetrate the coating film PL and come into contact with the metal base MB.

According to the working machine 1 of Item 3, even when the coating film PL (insulating layer) is present in the surface layer of the structural body 31 or 34, the structural bodies 31 and 34 can be conductively (electrically) connected to each other by bringing the conductive screw 35 into contact with the metal base MB of the structural body 31 or 34.

(Item 4) The working machine 1 according to Item 2, wherein the conductive screw 35 includes a shaft 350 including a screw thread to be screwed into at least one structural body of the two or more structural bodies 31, 34 overlapping each other, and a protrusion 350a defining the peeling structure that protrudes outward in a radial direction of the shaft 350 from the screw thread.

According to the working machine 1 of Item 4, the structural bodies 31 and 34 can be conductively (electrically) connected to each other only by the conductive screw 35 being screwed into the structural body 31.

(Item 5) The working machine 1 according to Item 4, wherein the conductive screw 35 includes a head 351 at a proximal end of the shaft 350 and having a mating surface Sa to come into contact with one of the structural bodies 31, 34, and a protrusion 350b defining the peeling structure that protrudes from the mating surface Sa.

According to the working machine 1 of Item 5, the coating film PL in the area facing the mating surface Sa can be peeled off by the conductive screw 35 being rotated (fastened) about the shaft 350, and the mating surface Sa (the protrusion 350b protruding from the mating surface Sa) can be conductively (electrically) connected to the structural body 34.

(Item 6) The working machine 1 according to Item 4, wherein the conductive screw 35 includes a large-diameter portion 352 that is a portion of the shaft 350 close to a proximal end of the shaft 350, and a small-diameter portion 353 that is another portion of the shaft 350 closer to a distal end of the shaft 350 than the large-diameter portion 352 and has a diameter smaller than a diameter of the large-diameter portion 352, the small-diameter portion 353 includes a screw thread to be screwed into the at least one structural body 31 of the two or more of the structural bodies 31, 34 overlapping each other, the screw thread being able to be fitted into a large-diameter hole H2a provided in the at least one structural body 31 that is closest to the distal end of the shaft 350 among the two or more structural bodies 31, 34 overlapping each other, and the protrusion 350a defining the peeling structure that protrudes outward in the radial direction of the shaft 350 from the screw thread is provided on an outer peripheral surface of the small-diameter portion 353.

According to the working machine 1 of Item 6, the coating film PL in the area facing the small-diameter portion 353 can be peeled off or removed, and the small-diameter portion 353 can be conductively (electrically) connected to the facing structural body 31.

(Item 7) The working machine 1 according to Item 6, wherein the large-diameter portion 352 includes, as the peeling structure, a convex thread 352a and a concave thread 352b on an outer periphery thereof, the convex thread 352a and the concave thread 352b extending lengthwise in an axial direction of the shaft 350 and being alternately aligned in a circumferential direction of the shaft 350.

According to the working machine 1 of Item 7, the coating film PL on the inner peripheral surface of the large-diameter hole H2a of the other structural body 34 can be scraped off and peeled off by the convex thread 352a, and the convex thread 352a can be brought into contact or pressure contact with the metal base (metal) MB of the structural body 34.

(Item 8) The working machine 1 according to any one of Items 1 to 7, wherein the at least two structural bodies include: a traveling frame 30; a turning frame 31 coupled to the traveling frame 30 so as to be turnable about an axis extending in an up-down direction; and a support frame 34 coupled to the turning frame 31, to support another member, wherein the turning frame 31 and the support frame 34 are brought into conduction by the conductive screw 35.

According to the working machine 1 of Item 8, the turning frame 31 and the support frame 34 are electrically connected by the conductive screw 35 and have the same potential.

(Item 9) The working machine 1 according to Item 8, wherein the turning frame 31 includes a fixture portion 314 to fix the support frame 34 to the turning frame 31 in a state of being overlapped with the turning frame 31 by two or more male screws S, 35, and at least one of the two or more male screws S, 35 is the conductive screw 35.

According to the working machine 1 of Item 9, the support frame 34 can be conductively (electrically) connected to the fixture portion 314 of the turning frame 31. Accordingly, the turning frame 31 (fixture portion 314) and the support frame 34 can have the same potential.

(Item 10) The working machine 1 according to Item 9, comprising: two or more fastening male screws S, S to fix the support frame 34 to the fixture portion 314 in addition to the conductive screw 35, wherein the conductive screw 35 connects the fixture portion 314 and the support frame 34 between the two or more fastening male screws S, S.

According to the working machine 1 of Item 10, the male screws S, S located on both sides of the conductive screw 35 can bear the strength burden.

(Item 11) The working machine 1 according to Item 10, wherein the conductive screw 35 has a diameter smaller than a diameter of the fastening screw S.

According to the working machine 1 of Item 11, the fixture portion 314 and the support frame 34 can be conductively connected while the space occupied by the conductive screw 35 is reduced.

The present invention is not limited to the above-described embodiments, and it is a matter of course that appropriate modifications can be made without departing from the scope of the present invention.

In the above-described embodiment, the cabin is employed as the operator's seat protection mechanism 32; however, the operator's seat protection mechanism 32 is not limited to the cabin. For example, the operator's seat protection mechanism 32 may be a so-called canopy including a roof that covers an area over the head of the worker seated on the operator's seat DS and a column 321 that supports the roof. Alternatively, the working machine 1 may be configured without the operator's seat protection mechanism 32. Still alternatively, the working machine 1 may be a remote controlled or autonomously driven working machine that does not include the operator's seat DS.

In the above-described embodiment, the battery 5 includes the battery 5a that supplies the electric power to the electrical component EP and the driving battery 5b that supplies the electric power to the electric motor. However, this does not imply any limitation. For example, the working machine 1 may include, as the battery 5, a single large battery (battery pack) that supplies electric power to both the electrical component EP and the electric motor of the prime mover 6.

In the above-described embodiment, the electric motor is employed as the prime mover 6; however, this does not imply any limitation. For example, the prime mover 6 may be an internal combustion engine such as a diesel engine, a gasoline engine, an LPG engine, or a hydrogen engine. Alternatively, the prime mover 6 may be a hybrid type prime mover in which the internal combustion engine and the electric motor are combined. As described above, when the internal combustion engine is employed as the prime mover 6, the working machine 1 includes, as the battery 5, only the battery 5b that supplies the electric power to the electrical component EP. Also, when the prime mover 6 is of the hybrid type in which the internal combustion engine and the electric motor are combined, the working machine 1 may include, as the battery 5, the battery 5a that supplies the electric power to the electrical component EP and the driving battery 5b that supplies the electric power to the electric motor, or may include the single large battery (battery pack) that supplies the electric power to both the electrical component EP and the electric motor of the prime mover 6.

In the above-described embodiment, the turning frame 31 and the support frame 34 are conductively connected and fastened by the conductive screw 35; however the connection by the conductive screw 35 is not limited to the connection between the turning frame 31 and the support frame 34. For example, the connection by the conductive screw 35 may be connection between the operator's seat protection mechanism 32 and the turning frame 31, connection between the traveling frame 30 and the turning frame 31 (fixation to the turning bearing BR), or the like. In other words, the connection by the conductive screw 35 as the electrically conductive member can be applied to the connection between one of the structural bodies 30, 31, 32, 33, and 34 to which the electrical component EP is attached, the one of the structural bodies 30, 31, 32, 33, and 34 including the metal base MB and the coating film PL, and another one of the structural bodies 30, 31, 32, 33, and 34 that is coupled to the one of the structural bodies 30, 31, 32, 33, and 34, the other one of the structural bodies 30, 31, 32, 33, and 34 including the metal base MB and the coating film PL. Also, in the present embodiment, the hood 33 made of the metal material is used; however, this does not imply any limitation, and the hood 33 made of, for example, an electrically-non-conductive resin material may be used.

In the above-described embodiment, the backhoe has been described as an example; however, the working machine 1 is not limited to the backhoe. For example, the working machine 1 may be an agricultural machine such as a combine, a rice transplanter, or a lawn mower, may be a construction machine such as a wheel loader, a compact track loader, or a skid-steer loader, or may be an industrial machine such as a forklift.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine (1) comprising:
an electrical component (EP);
at least two structural bodies (30, 31, 32) each having electrical conductivity; and
a conductive screw (35) to conductively connect the at least two structural bodies (30, 31, 32, 33, 34) to each other.

2. The working machine (1) according to claim 1, wherein
at least one structural body of the structural bodies (31, 34) conductively connected by the conductive screw (35) includes
a metal base (MB) having electrical conductivity, and
a coating film (PL) formed on the metal base (MB), and
the conductive screw (35) includes, at a portion thereof to be in contact with the at least one structural body (31, 34), a peeling structure (350a, 350b) to peel off the coating film (PL) and bring the conductive screw (35) into contact with the metal base (MB).

3. The working machine (1) according to claim 1, wherein
at least one structural body of the structural bodies (31, 34) conductively connected by the conductive screw (35) includes
a metal base (MB) having electrical conductivity, and
a coating film (PL) formed on the metal base (MB), and
the conductive screw (35) includes, at a portion thereof to be in contact with the at least one structural body (31, 34), a contact spot to penetrate the coating film (PL) and come into contact with the metal base (MB).

4. The working machine (1) according to claim 2, wherein
the conductive screw (35) includes
a shaft (350) including a screw thread to be screwed into at least one structural body of the two or more structural bodies (31, 34) overlapping each other, and
a protrusion (350a) defining the peeling structure that protrudes outward in a radial direction of the shaft (350) from the screw thread.

5. The working machine (1) according to claim 4, wherein
the conductive screw (35) includes
a head (351) at a proximal end of the shaft (350) and having a mating surface (Sa) to come into contact with one of the structural bodies (31, 34), and
a protrusion (350b) defining the peeling structure that protrudes from the mating surface (Sa).

6. The working machine (1) according to claim 4 or 5, wherein
the conductive screw (35) includes
a large-diameter portion (352) that is a portion of the shaft (350) close to a proximal end of the shaft (350), and
a small-diameter portion (353) that is another portion of the shaft (350) closer to a distal end of the shaft (350) than the large-diameter portion (352) and has a diameter smaller than a diameter of the large-diameter portion (352),
the small-diameter portion (353) includes a screw thread to be screwed into the at least one structural body (31) of the two or more of the structural bodies (31, 34) overlapping each other, the screw thread being able to be fitted into a large-diameter hole (H2a) provided in the at least one structural body (31) that is closest to the distal end of the shaft (350) among the two or more structural bodies (31, 34) overlapping each other, and
the protrusion (350a) defining the peeling structure that protrudes outward in the radial direction of the shaft (350) from the screw thread is provided on an outer peripheral surface of the small-diameter portion (353).

7. The working machine (1) according to claim 6, wherein the large-diameter portion (352) includes, as the peeling structure, a convex thread (352a) and a concave thread (352b) on an outer periphery thereof, the convex thread (352a) and the concave thread (352b) extending lengthwise in an axial direction of the shaft (350) and being alternately aligned in a circumferential direction of the shaft (350).

8. The working machine (1) according to any one of claims 1 to 7, wherein
the at least two structural bodies include:
a traveling frame (30);
a turning frame (31) coupled to the traveling frame (30) so as to be turnable about an axis extending in an up-down direction; and
a support frame (34) coupled to the turning frame (31), to support another member, wherein
the turning frame (31) and the support frame (34) are brought into conduction by the conductive screw (35).

9. The working machine (1) according to claim 8, wherein
the turning frame (31) includes a fixture portion (314) to fix the support frame (34) to the turning frame (31) in a state of being overlapped with the turning frame (31) by two or more male screws (S, 35), and
at least one of the two or more male screws (S, 35) is the conductive screw (35).

10. The working machine (1) according to claim 9, comprising:
two or more fastening male screws (S, S) to fix the support frame (34) to the fixture portion (314) in addition to the conductive screw (35), wherein
the conductive screw (35) connects the fixture portion (314) and the support frame (34) between the two or more fastening male screws (S, S).

11. The working machine (1) according to claim 10, wherein the conductive screw (35) has a diameter smaller than a diameter of the fastening screw (S).
